# EUROPEAN PATENT APPLICATION

(11) **EP 3 454 287 A1**
(43) Date of publication of application: **13.03.2019**
(21) Application number: 18159713.9
(22) Date of filing: 02.03.2018
(51) Int. Cl.: G06Q 50/02, G06Q 40/04

(54) **REVENUE ALLOCATION SYSTEM AND REVENUE ALLOCATION METHOD**

(30) Priority: 12.09.2017 JP 2017174702
(71) Applicant: Hitachi, Ltd., Chiyoda-ku Tokyo 100-8280 (JP)
(72) Inventor: OYAMATSU, Masayuki, Tokyo, 100-8280 (JP); YAMAGATA, Shohei, Tokyo, 100-8280 (JP); NAGANO, Hirofumi, Tokyo, 100-8280 (JP); NISHIZAWA, Itaru, Tokyo, 100-8280 (JP)
(74) Representative: MERH-IP Matias Erny Reichl Hoffmann Patentanwälte PartG mbB

(57) **Abstract**

The present invention stabilizes and expedites incomes of primary sector workers and thus supports transformation of the primary industry into the senary industry. An information processor configured as a revenue allocation system 100 includes a storage device 205 that manages information on transactions generated in commercial distribution of products produced by primary sector workers, the commercial distribution starting from the primary sector workers; and an arithmetic device 202 that executes predetermined purchase processing for ownership of a delivered product associated with a predetermined transaction in the commercial distribution, with a predetermined broker as a buyer, based on the information on the transactions, that calculates a difference in value between a credit held by the broker for a creditor of the transaction and the ownership obtained through the purchase processing, and that executes predetermined payment processing for an amount corresponding to the difference.

## Description

### CROSS-REFERENCE TO RELATED APPLICATION

This application claims priority pursuant to 35 U.S.C. §119 from Japanese Patent Application No. 2017-174702, filed on September 12, 2017, the entire content of which is incorporated herein by reference.

### BACKGROUND

The present invention relates to a revenue allocation system, a revenue allocation method, and a computer-readable medium. More particularly, the present invention relates to a technology for stabilizing and expediting incomes of primary sector workers and thus supporting the promotion of transformation of the primary industry into the senary industry.

Primary sector workers including farmers earn their incomes basically by distributing crops and harvests to markets and wholesalers. However, since production is likely to vary, such as poor harvest or poor catch of fish due to bad weather such as cold weather and typhoons, or oppositely too abundant harvest or catch of fish because of good weather conditions and the like, it is difficult to stabilize their incomes.

Therefore, there is a trend to accelerate the development into the senary sector by also distributing such primary sector products through the food processing industry and the distribution and sales industry. The development into the senary sector aims to stabilize incomes of primary sector workers without the impact of the fluctuation in wholesale prices in the market or the like, by selling the products after preparation, processing, and packaging.

However, primary sector workers typically lack the know-how for such food processing or distribution and sales. Therefore, it is often the case that primary sector workers actually make an effort to construct required commercial distribution by outsourcing through sales to existing processors and distributors for transformation into the senary industry. In this case, incomes of primary sector workers is set and earned as the price of products sold by distributors and retailers at the end of commercial distribution.

Meanwhile, the following technology has been proposed as a conventional technology for allocating a revenue among parties involved in commercial distribution. Specifically, a sales management method (see Patent Document 1) and the like have been proposed. The sales management method includes the steps of: storing a revenue allocation rate for an entity that executes promotion for product sales and receives revenue allocation; generating a reservation record including a customer number, the quantity of products reserved, which is specified based on an instruction from a reservation holder, and an identifier of the entity and an identifier of the product; generating a settled record including the quantity of sold products, the identifier of the entity, and the identifier of the product, from the reservation record; and calculating revenue allocation of the entity based on the revenue allocation rate, product price information, the quantity of sold products included in the settled record, and the identifier of the entity and the identifier of the product. See Japanese Patent Publication No. 3239117, for example.

As described above, even with the development into the senary sector, primary sector workers do not earn their incomes until relevant products are actually sold to customers, leading to a risk that materials required for the next production or funds for introduction of equipment cannot be secured by the appropriate time. Moreover, with an increase in the hierarchy or number of processors as well as distributors and retailer in senary sector commercial distribution, the frequency of settlement between the primary sector workers described above and various vendors is also increased, leading to an increase in settlement charge to be paid to a financial institution.

### SUMMARY

Therefore, it is an object of the present invention to provide a technology for stabilizing and expediting incomes of primary sector workers and thus supporting the promotion of the primary industry into the senary industry.

A revenue allocation system includes a storage device that manages information on transactions generated in commercial distribution of products produced by primary sector workers, the commercial distribution starting from the primary sector workers; and an arithmetic device that executes predetermined purchase processing for ownership of a delivered product associated with a predetermined transaction in the commercial distribution, with a predetermined broker as a buyer, based on the information on the transactions, that calculates a difference in value between a credit held by the broker for a creditor of the transaction and the ownership obtained through the purchase processing, and that executes predetermined payment processing for an amount corresponding to the difference for the creditor of the transaction.

A revenue allocation method for an information processor including a storage device that manages information on transactions generated in commercial distribution of products produced by primary sector workers, the commercial distribution starting from the primary sector workers, the information processor performing the steps of: executing predetermined purchase processing for ownership of a delivered product associated with a predetermined transaction in the commercial distribution, with a predetermined broker as a buyer, based on the information on the transactions, calculating a difference in value between a credit held by the broker for a creditor of the transaction and the ownership obtained through the purchase processing, and executing predetermined payment processing for an amount corresponding to the difference for the creditor of the transaction.

A non-transitory computer-readable medium containing a program causing an information processor including a storage device that manages information on transactions generated in commercial distribution of products produced by primary sector workers, the commercial distribution starting from the primary sector workers, to execute predetermined purchase processing for ownership of a delivered product associated with a predetermined transaction in the commercial distribution, with a predetermined broker as a buyer, based on the information on the transactions, calculate a difference in value between a credit held by the broker for a creditor of the transaction and the ownership obtained through the purchase processing, and execute predetermined payment processing for an amount corresponding to the difference for the creditor of the transaction.

The present invention makes it possible to stabilize and expedite the incomes of primary sector workers and thus to support the promotion of the senary industrialization.

### BRIEF DESCRIPTION OF THE DRAWINGS

Fig. 1 is a diagram showing a configuration example of a revenue allocation system according to the first embodiment.

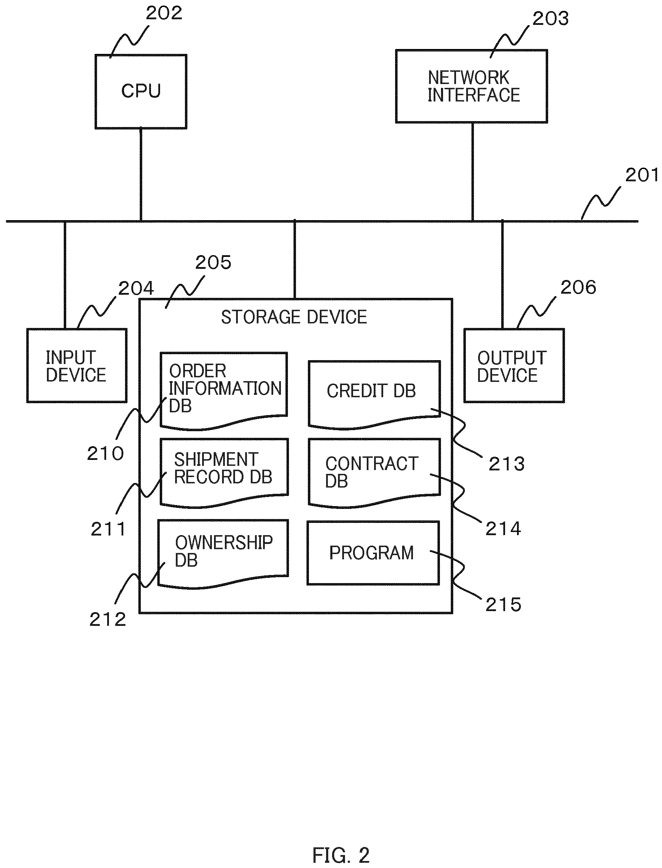

Fig. 2 is a diagram showing a hardware configuration example of each of terminals included in the revenue allocation system of the first embodiment.
Fig. 3 is a table showing a configuration example of an order information database according to the first embodiment.
Fig. 4 is a table showing a configuration example of a shipment record database according to the first embodiment.
Fig. 5 is a table showing a configuration example of an ownership database according to the first embodiment.
Fig. 6 is a table showing a configuration example of a credit database according to the first embodiment.
Fig. 7 is a table showing a configuration example of a contract database according to the first embodiment.
Fig. 8 is a flowchart showing the first flow example of a revenue allocation method according to the first embodiment.
Fig. 9 is a flowchart showing the second flow example of the revenue allocation method according to the first embodiment.
Fig. 10 is a flowchart showing the third flow example of the revenue allocation method according to the first embodiment.
Fig. 11 is a flowchart showing the fourth flow example of the revenue allocation method according to the first embodiment.
Fig. 12 is a diagram showing a concept example of commercial distribution and revenue allocation according to the first embodiment.
Fig. 13 is a diagram showing a configuration example of a revenue allocation system according to the second embodiment.
Fig. 14 is a diagram showing a hardware configuration example of each of terminals included in the revenue allocation system of the second embodiment.

### DETAILED DESCRIPTION OF EMBODIMENTS

### First Embodiment

### System configuration example

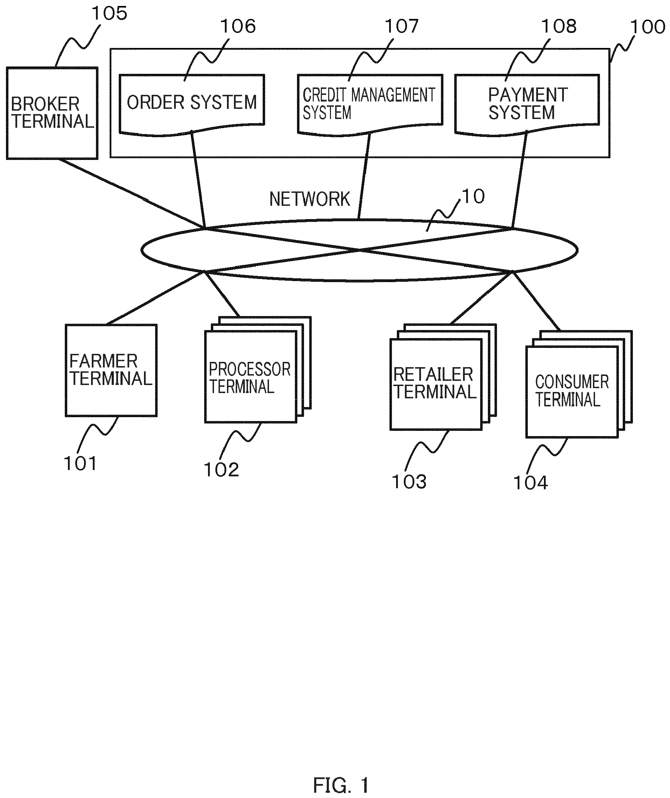

With reference to the drawings, detailed description is given below of the present embodiments of the present invention. Fig. 1 is a diagram showing a configuration example of a revenue allocation system 100 according to the present embodiment. The revenue allocation system 100 shown in Fig. 1 is a computer system to stabilize and expedite incomes of primary sector workers and thus to support the promotion of transformation of the primary industry into the senary industry.

Here, assuming a farmer as an example of primary sector workers, products to be distributed among commercial distribution in the present embodiment are crops and products obtained by processing the crops. With the farmer's intent to transform itself into the senary industry, the crops produced by the farmer are sold to a processor and then processed. Meanwhile, products produced by such processing, i.e., processed products are sold to consumers through predetermined sales channels such as at a retailer's store and on the Internet.

More specifically, the commercial distribution assumed here is a series of supply chains including production of crops by a farmer, production of processed products by processing the crops by a processor who has made a contract with the farmer, and sales of the processed products by a retailer who has made a contract with the processor.

Under the above assumption, a farmer terminal 101 operated by a farmer, a processor terminal 102 operated by a processor, a retailer terminal 103 operated by a retailer, a consumer terminal 104 operated by a consumer, a broker terminal 105 operated by a broker, as well as an order system 106, a credit management system 107, and a payment system 108 for managing the supply chains described above are coupled through a network 10. Note that the network 10 is selected appropriately based on the contents, nature, and organization of communication, and the like. For example, the network 10 between terminals of participants in commercial distribution who belong to the same organization is an internal network such as a LAN within the organization, while the network 10 between terminals of those who belong to different organizations is the Internet.

It is possible to assume that, among the above, the order system 106, the credit management system 107, and the payment system 108 are included in the revenue allocation system 100 of the present embodiment. Note, however, that the respective functions of the order system 106, the credit management system 107, and the payment system 108 may be included in any of the systems, which solely constitutes the revenue allocation system 100. Alternatively, any of the terminals coupled to the network 10 may solely or in cooperation constitute the revenue allocation system 100, as in the case of the order system 106, the credit management system 107, and the payment system 108 described above.

Within the above configuration, the farmer terminal 101 is a terminal used by the farmer to transmit and receive information regarding transactions with others in the supply chains, such as the broker and the processor. The farmer uses such a farmer terminal 101 to input and output information regarding various procedures, such as a procedure for receiving orders from the processor that is a direct sale destination of the produced crops, a procedure for making a lease contract for equipment, such as farm machinery required for crop production, with the broker, and a procedure for settlement between the farmer and the broker or the processor.

Note that it is assumed that the broker in the present embodiment is a vendor that runs a leasing business for equipment such as farm machinery. However, as a matter of course, the broker is not limited to such a vendor. Therefore, the broker may be any participant other than primary sector workers in the commercial distribution or may be someone only engaged in broking business, such as a financial institution not directly involved in distribution of crops and processed products.

Also, the processor terminal 102 is a terminal used by the processor to transmit and receive information regarding transactions with others in the supply chains, such as the farmer and retailer described above. The processor uses such a processor terminal 102 to input and output information regarding various procedures, such as a procedure for ordering and receiving crops to and from the farmer, a procedure for receiving orders of processed products from the retailer, a procedure for leasing equipment such as production machinery from the broker, and a procedure for settlement between the processor and the broker or the retailer.

Moreover, the retailer terminal 103 is a terminal used by the retailer to transmit and receive information regarding transactions with others in the supply chains, such as the processor and the consumer. The retailer uses such a retailer terminal 103 to input and output information regarding various procedures, such as a procedure for ordering and receiving processed products to and from the processor (or crops to and from the farmer), a procedure for leasing equipment such as a point of sales (POS) terminal required for retail sales, and a procedure for settlement between the retailer and the broker or the processor.

Further, the consumer terminal 104 is a terminal used by the consumer to transmit and receive information regarding transactions with the retailer, i.e., product purchase. The consumers are those who purchase and consume the crops produced by the farmer or processed products produced by the processor described above through a physical store of the retailer described above or an electronic store on the Internet (including the concept of auction sites).

Furthermore, the broker terminal 105 is a terminal used by the broker to transmit and receive information regarding transactions with respective participants in the commercial distribution described above. As described above, the broker is a vendor that runs a leasing business for equipment such as farm machinery and production machinery. Therefore, the broker uses the broker terminal 105 to perform a procedure for receiving lease contracts for equipment, such as farm machinery and production machinery, with the farmer, the processor, and the broker, a procedure for buying crops from the farmer and processed products thereof from the processor, a procedure for revenue allocation associated therewith, and to perform management, transfer, and the like of credit information.

Meanwhile, the order system 106 included in the revenue allocation system 100 is a system used by participants in the commercial distribution described above, i.e., the farmer, the processor, the retailer, and the consumer to order crops and processed products, which are products, or to lease equipment such as farm machinery and production machinery. To be more specific, it is assumed that the order system 106 is a server device that provides WEB services to receive orders in the network 10 described above and to perform processing of transactions associated therewith. As the basic configuration itself of such an order system, an existing one may be adopted as appropriate.

Also, the credit management system 107 in the revenue allocation system 100 is a system for executing credit management processing such as registration, transfer, and modification of credit information generated by the transactions processed by the order system 106 described above.

Moreover, the payment system 108 in the revenue allocation system 100 is a system for executing predetermined processing corresponding to payment procedures for the transactions, associated with the respective processing by the order system 106 and credit management system 107 described above.

Note that the order system 106, credit management system 107, and payment system 108 described above are not limited to the configuration where the respective systems are configured and provided as hardware, but may be implemented in a configuration where the systems are remotely provided through the network 10, such as software as a service (SaaS).

### Hardware configuration

Next, description is given of a hardware configuration of the revenue allocation system 100. Here, description is given of a case where the revenue allocation system 100 is configured as a single information processor. More specifically, description is given of a hardware configuration of an information processor including the functions and configurations of the order system 106, the credit management system 107, and the payment system 108.

The revenue allocation system 100 of the present embodiment includes a CPU 202, a network interface 203, an input device 204, a storage device 205, and an output device 206, which are coupled through a bus 201.

Among the above, the CPU 202 is an arithmetic device that executes a program 215 stored in the storage device 205 to implement a functionality required for the revenue allocation system 100 and perform integrated control of the system itself, as well as to perform various determination, arithmetic, and control processing.

Also, the network interface 203 is a device that transmits and receives data to and from the farmer terminal 101, processor terminal 102, retailer terminal 103, consumer terminal 104, and broker terminal 105 described above through the network 10 such as the Internet and an intranet. The contents to be transmitted and received by the network interface 203 are controlled by the CPU 202. The network interface 203 as described above is configured using a network interface card (NIC), a wireless LAN interface card or the like, for example.

Moreover, the input device 204 is, although not an essential constituent component, a device such as a keyboard, a mouse, and a touch panel, which receives instructions from a manager of the revenue allocation system 100 or the like, for example.

Further, the storage device 205 is configured using an appropriate non-volatile storage device such as a solid state drive (SSD) and a hard disk drive, and stores data such as the program 215 to be executed by the CPU 202 and various databases.

Furthermore, the output device 206 is a device such as a display monitor that displays predetermined information on a screen, based on instructions from the CPU 202.

Note that the storage device 205 stores at least an order information database 210, a shipment record database 211, an ownership database 212, a credit database 213, and a contract database 214, in addition to the program 215 to implement the functionality required for the revenue allocation system 100 of the present embodiment.

### Data structure example

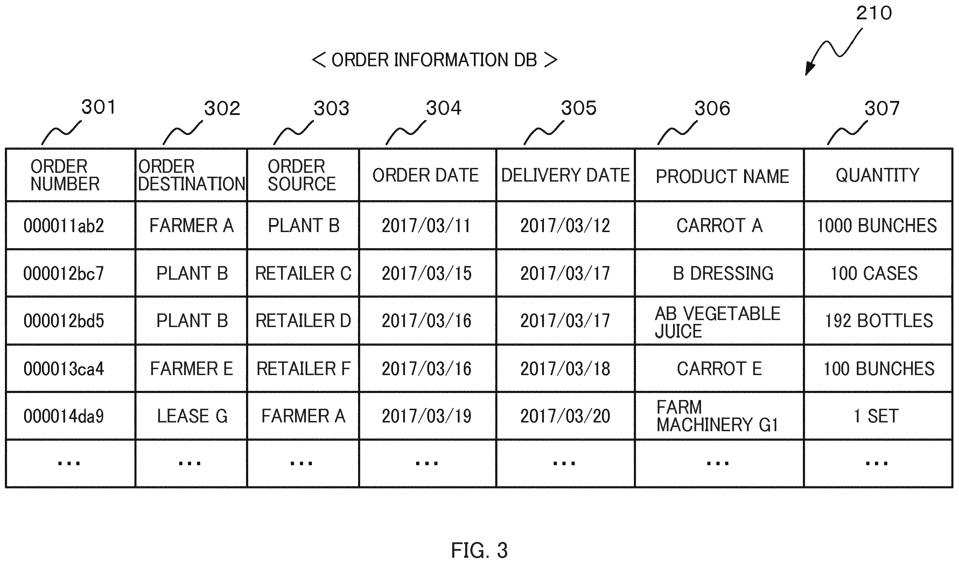

Next, description is given of data to be used by the revenue allocation system 100 of the present embodiment. Fig. 3 shows an example of the order information database 210 according to the present embodiment. The order information database 210 is a database that stores information on orders placed with the order system 106 by respective participants, in the commercial distribution described above, operating the respective terminals.

A data structure thereof is a collection of records with values of order number 301, order destination 302, order source 303, order date 304, delivery date 305, product name 306, and quantity 307, for example, associated with each other.

Among the above, the order number 301 is identification information for uniquely specifying an order record stored in the order information database 210.

On the one hand, the order destination 302 indicates the name of an order destination vendor for the order. On the other hand, the order source 303 indicates the name of an order source vendor for the order. The names of such order destination vendor and order source vendor may also be number codes that can differentiate the vendors.

The order data 304 indicates the date when the order source vendor and order destination vendor described above have agreed on the content of the order.

The delivery date 305 indicates a scheduled delivery date included in the agreed content of the order described above.

The product name 306 is the name of a product ordered by the order source vendor. Note that the product corresponds to the crops or processed product as described above (hereinafter the same applies).

The quantity 307 indicates the quantity of the products ordered by the order source vendor through the order.

Note that the configuration of the order information database 210 shown in Fig. 3 is merely an example, and the order of the items, presence or absence thereof, and the item names may be adopted as appropriate.

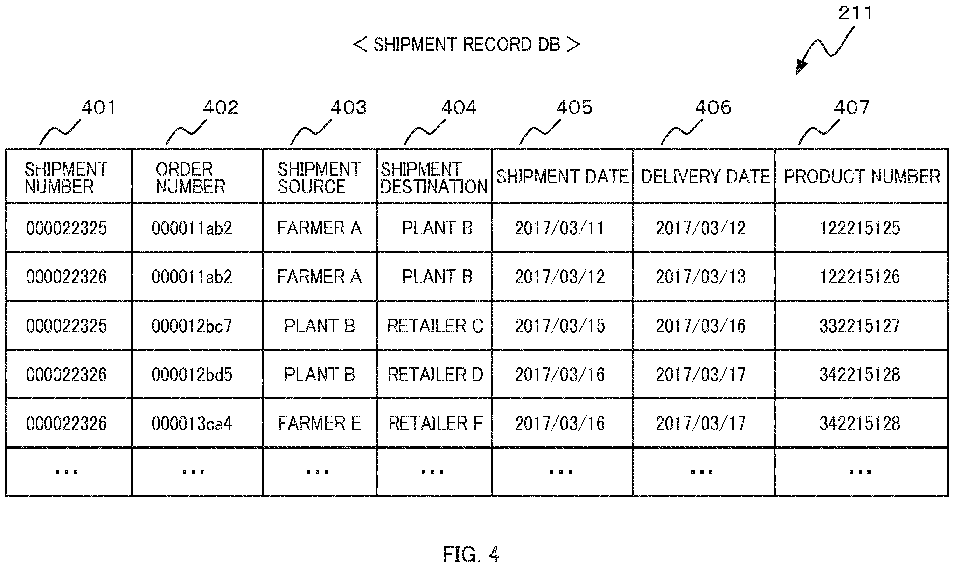

Meanwhile, Fig. 4 shows an example of the shipment record database 211 according to the present embodiment.

The shipment record database 211 is a database that manages information on an event of shipment of a target product of the order, based on the order processed by the order system 106 described above.

The shipment record database 211 as described above is a collection of records with values of shipment number 401, order number 402, shipment source 403, shipment destination 404, shipment date 405, delivery date 406, and product number 407 associated with each other.

Among the above, the shipment number 401 is identification information for uniquely specifying a shipment record stored in the shipment record database 211.

The order number 402 is the number indicating the order connected to the shipment, and is the same as the order number 301 in the order information database 210 shown in Fig. 3. Note that, if one order is divided into multiple shipments, such order information is included in multiple shipment histories.

On the one hand, the shipment source 403 indicates the name of a vendor that has shipped the product. On the other hand, the shipment destination 404 indicates the name of a shipment destination vendor for the product. The names of such shipment source 403 and shipment destination 404 may also be number codes that can differentiate the vendors.

The shipment date 405 indicates the date of the shipment made by the shipment source vendor. The delivery date 406 indicates the date of arrival of the product shipped by the shipment source vendor at the vendor of the shipment destination 404.

The product number 407 is identification information for uniquely specifying the product that has arrived at the vendor of the shipment destination 404 described above. The product number is used to differentiate the shipped products, even if they are the same products, shipment by shipment. Thus, the value of the product number 407 does not have to be given to each of the products, but can be assumed to be given for each order or each delivery (lot).

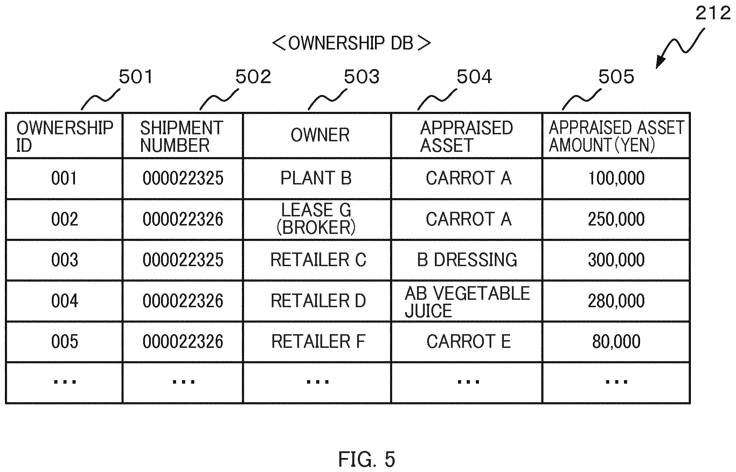

Next, Fig. 5 shows an example of the ownership database 212 according to the present embodiment. The ownership database 212 is a DB of ownership information indicating the owner of products actually traded among participants in the commercial distribution described above.

The ownership database 212 as described above is a collection of records with values of ownership ID 501, shipment number 502, owner 503, appraised asset 504, and appraised asset amount 505 associated with each other.

Among the above, the ownership ID 501 is identification information for uniquely specifying the ownership information included in the ownership database 212.

The shipment number 502 is information connecting the ownership database 212 to the shipment record database 211, and is the same as the shipment number 401 shown in Fig. 4.

The owner 503 indicates the name of the owner of the product.

The appraised asset 504 indicates the name of goods to be owned, i.e., the name of products.

The appraised asset amount 505 indicates the appraised amount of products indicated by the appraised asset 504 described above.

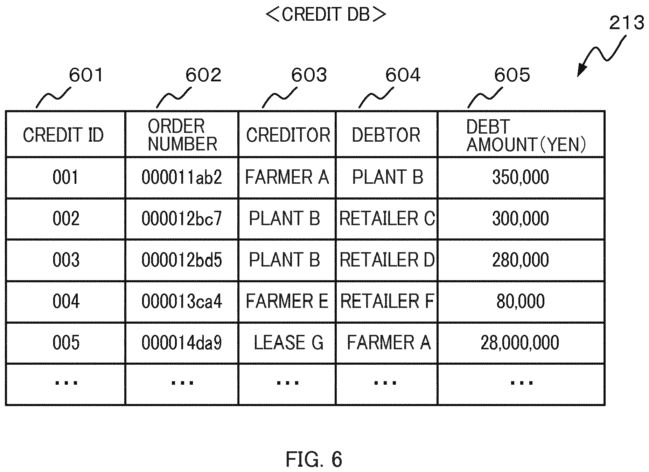

Next, Fig. 6 shows an example of the credit database 213 according to the present embodiment. The credit database 213 is a DB that stores information on each credit associated with transfer of the ownership of products between participants during transactions in the commercial distribution described above. The credit database 213 is a collection of records with values of credit ID 601, order number 602, creditor 603, debtor 604, and debt amount 605 associated with each other.

Among the above, the credit ID 601 is identification information for uniquely specifying a record in the credit database 213.

The order number 602 is information connecting the credit database to the shipment record database 211, and is the same as the order information 301 shown in Fig. 3.

The creditor 603 is information indicating the name of a vendor that is the creditor.

The debtor 604 is information indicating the name of a vendor that is the debtor 604.

The debt amount 605 is information indicating the amount of the debt.

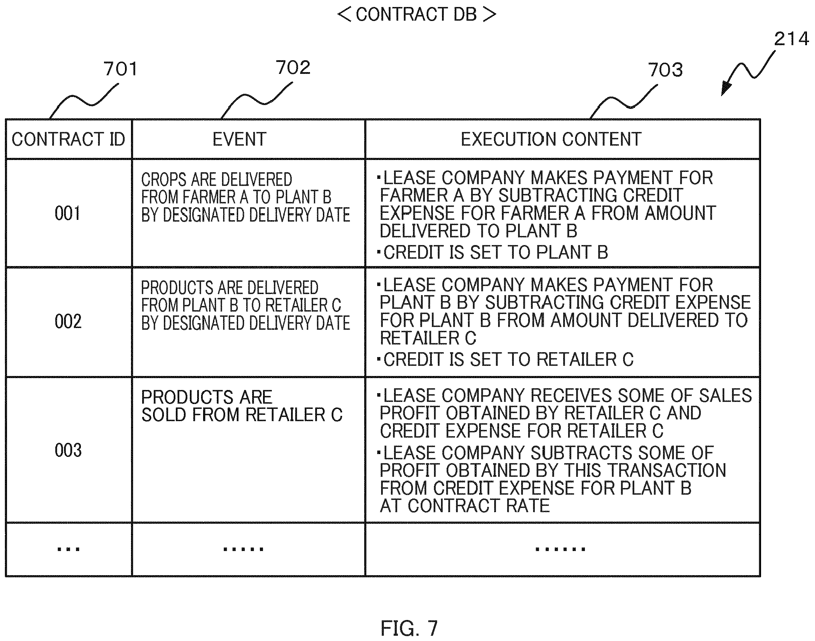

Next, Fig. 7 shows an example of the contract database 214 according to the present embodiment. The contract database 214 is a DB that stores a revenue allocation protocol, for each transaction event, in a revenue allocation method according to the present embodiment. The contract database 214 as described above is a collection of records with values of contract ID 701, event 702, and execution content 703 associated with each other.

Among the above, the contract ID 701 is identification information for uniquely specifying each contract record in the contract database 214.

The event 702 is information indicating a transaction event that is an execution condition for the contract content. Assuming, for example, transaction event information "crops are delivered from Farmer A to Plant B by the designated delivery date", such a transaction event is detected by the revenue allocation system 100.

The execution content 703 is information indicating a payment procedure and a method for transferring credit information, which are executed when a transaction event consistent with the event 702 is detected by the revenue allocation system 100. For example, when the transaction event "crops are delivered from Farmer A to Plant B by the designated delivery date" is detected, information regarding a payment content and a method for transferring a credit, which are executed among the vendors such as "Farmer A", "Plant B", and a broker involved, corresponds to such execution content.

Note that the event 702 and the execution content 703 included in the contract database 214 shown in Fig. 7 may not only be information described in natural language sentences as in the illustrated example, but may also be described in a programming language executed in the revenue allocation system 100.

Moreover, the configuration of the contract database 214 shown in Fig. 7 is not necessarily limited thereto, but the event target vendor may be set in another column, for example, and the event may be prepared as a template, which can be copied by changing the target.

### First flow example on order processing

With reference to the drawings, description is given below of an actual procedure of the revenue allocation method according to the present embodiment. Various operations corresponding to the revenue allocation method described below are realized by a program read into a memory or the like and then executed by the devices included in the revenue allocation system 100. The program includes codes for performing such various operations described below.

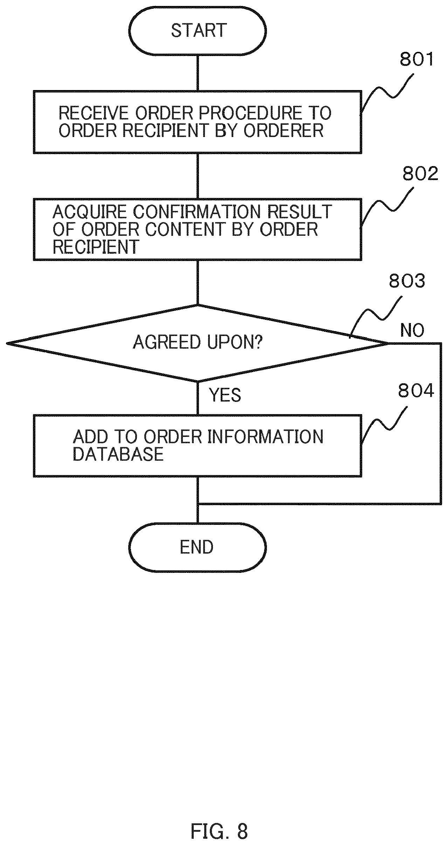

Fig. 8 is a flowchart showing the first flow example of the revenue allocation method according to the present embodiment. Here, description is given of processing by the order system 106 in the revenue allocation system 100.

In this case, the order system 106 receives a request for a order procedure to an order recipient, which is made by an orderer in the commercial distribution described above, from a terminal of the orderer through a predetermined website for receiving orders (Step 801).

Although not particularly illustrated, the website described above delivers a monitor display to the terminal of the orderer, such as the processor terminal 102 or the retailer terminal 103, the monitor display including an interface to receive the specification of the order content, such as the order destination, order source, delivery date, product name of products to be ordered, and quantity thereof. The website also receives the order content through the monitor display and acquires the value thereof.

For example, the order system 106 receives a request to perform a procedure for ordering a predetermined quantity of carrots to a certain farmer from the processor terminal 102 of a certain processor that produces a dressing made from vegetables. Alternatively, the order system 106 receives a request to perform a procedure for ordering 100 cases of the dressing to the processor described above from the retailer terminal 103 of a certain retailer.

Then, the order system 106 delivers a predetermined monitor display to the terminal of the order recipient such as the farmer or processor described above, i.e., the farmer terminal 101 or the processor terminal 102, the predetermined monitor display including the order content from the orderer described above, and acquires through the monitor display the result of checking the order content by the order recipient such as the farmer or the processor (Step 802).

The order recipient in this case checks if there is any problem by browsing the order content from the orderer on the terminal of the orderer. If there is no problem in the order content as a result of the checking, the order recipient operates the terminal to select a predetermined interface (e.g., agreement button) on the monitor display. On the one hand, upon such selection, the terminal of the order recipient notifies at least the order system 106 of the intention of receiving the order, i.e., agreement.

On the other hand, if there is a problem in the order content as a result of the checking described above, the order recipient selects a predetermined interface (e.g., disagreement button) on the monitor display to the effect that the order cannot be received. In such a case, upon such selection, the terminal of the order recipient notifies at least the order system 106 of the intention of not allowing the receipt of the order, i.e., disagreement.

Subsequently, the order system 106 determined whether or not the order content is agreed upon by the orderer and order recipient described above, based on the result of checking the order content in Step 802 described above (Step 803). More specifically, upon receipt of the notification of the intention of receiving the order, i.e., agreement since there is no problem in the order content, it is determined that the order content is agreed upon.

On the one hand, if the order content is not agreed upon (Step 803: No) as a result of the determination described above, the order system 106 terminates the processing as the order has fallen through.

On the other hand, if the order content is agreed upon (Step 803: Yes) as a result of the determination described above, the order system 106 stores a record including the order content in the order information database 210 (Step 804) and then terminates the processing.

For example, it is assumed that the processor terminal 102 of "Plant B" that is the orderer makes a request to perform an order procedure including an order content of "1000 bunches" of "Carrots A" to "Farmer A" that is the order recipient, on the order system 106 through the website described above. It is also assumed that the retailer terminal 103 of "Retailer C" that is the orderer makes a request to perform an order procedure including an order content of "100 cases" of "B dressing" that is the processed product of Carrot A to "Plant B" that is the order recipient, on the order system 106 through the website described above.

Meanwhile, if the order is agreed upon by "Retailer C" and "Plant B" as well as by "Plant B" and "Farmer A" described above, i.e., upon receipt of the notification of agreement from the respective terminals of the order recipients, the order system 106 generates records of the order numbers "000011ab2" and "000012bc7" and stores the generated records.

Note that, as for the processing for creating the agreement in Steps 802 and 803 described above, the order system 106 may autonomously create the agreement as long as the inventory quantity and sales price of crops as the products to be ordered at the farmer as the order destination are within a certain range from the values of the corresponding items in the order content. In such a case, it is preferable that such conditions for creating the agreement are described in the contract database 214 so that the order system 106 can use such conditions as appropriate.

### Second flow example on payment processing

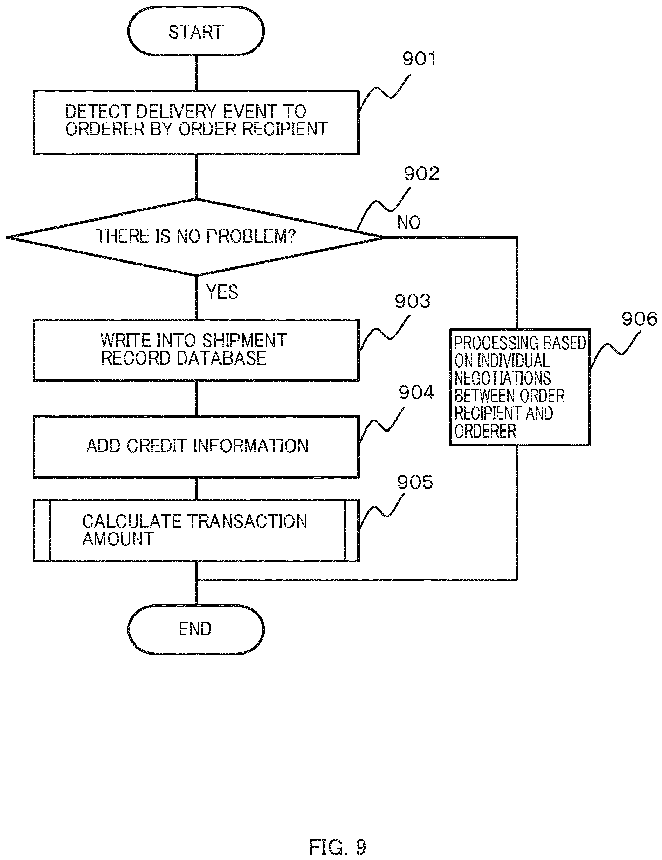

Next, description is given of processing by the payment system 108 according to the present embodiment. Fig. 9 shows an example of a processing flow executed by the payment system 108.

Here, as for an order with its order content registered in the order information database 210 through processing by the order system 106 described above, delivery of target products to an orderer by an order recipient of the order serves as a trigger of this flow.

Therefore, as for a delivery operation executed by the order recipient based on the order content described above, the terminal of the order recipient described above notifies the order system 106 of the content of the delivery operation based on notification from a predetermined delivery management system (e.g., operated by the order recipient) or input from a predetermined person in charge of delivery.

Likewise, when the delivery operation by the order recipient described above has allowed the orderer described above to receive the ordered products and also perform inspection thereof, the terminal of the orderer notifies the order system 106 of the content of the receipt and inspection of the ordered products based on notification from a predetermined inspection management system (e.g., operated by the orderer) or input from a predetermined inspector.

Thus, the payment system 108 in this case detects occurrence of a delivery event for the order, upon receipt of notification of information regarding the delivery operation from the terminal of the order recipient described above and notification of information regarding the receipt and inspection of the target product from the terminal of the orderer described above (e.g., including the values of the order number, order recipient, orderer, shipment date, and product number of target product of the corresponding order).

Moreover, the payment system 108 determines whether or not there is any problem with the order content agreed upon with the order recipient, such as the delivered product that is the target product or the delivery date, by referring to the information regarding the receipt and inspection received from the terminal of the orderer for the delivery event detected instep 901 described above (Step 902). Note that the terminal of the orderer notifies the payment system 108 of the information regarding the receipt and inspection described above, including the result of checking the delivered product by the inspector and the presence or absence of a delay in delivery.

On the one hand, when it is determined, as a result of the determination described above, that there is a problem with the delivery by the order recipient (Step 902: No), the payment system 108 notifies the respective terminals of the order recipient and the orderer of a message or the like encouraging predetermined individual negotiations between the order recipient and orderer described above (Step 906) and then terminates the processing.

On the other hand, when it is determined, as a result of the determination described above, that there is no problem with the delivery by the order recipient (Step 902: Yes), the payment system 108 generates a predetermined record based on the information regarding the receipt and inspection of the target product notified by the terminal of the orderer described above, and writes the generated record in the shipment record database 211 (Step 903).

During such writing of a record, the payment system 108 sets the order number (extracted from the information regarding the receipt and inspection) regarding the order of which delivery event has occurred, as the order number 402 of the record. Note that, when multiple delivery events have occurred for one order number, i.e., one order, the payment system 108 connects one order number "000011ab2" to multiple rows of the shipment number, such as the records of the shipment numbers "000022325" and "000022326" in the shipment record database 211 shown in Fig. 4.

Subsequently, the payment system 108 stores information on a credit generated by this delivery event in the credit database 213 (Step 904). In this case, the payment system 108 searches through the shipment record database 211 for a record regarding this delivery event, and sets the value of the order number 402 in the record as the value of the order number 602. Moreover, the payment system 108 sets the value of the shipment source 403 in the record as the value of the creditor 603. Furthermore, the payment system 108 sets the value of the shipment 404 in the record as the value of the debtor 604. Thus, the vendor set as the debtor 604, i.e., the orderer has an obligation to pay the order recipient as the creditor 603. In this event, the payment system 108 uses the value of the order number 402 in the record as a primary key to specify the record of the order in the order information database 210 and extract the value of the quantity 307. Moreover, the payment system 108 calculates a payment amount by multiplying the value of the quantity 307 by the unit price of the target product (information previously acquired from the order recipient), and sets this payment amount as the value of the payment amount 605.

Note that the addition of the record to the credit database 213 described above does not necessarily occur only for the delivery event between the vendors in the above case. For example, as in the case of the credit ID "005", when the vendor "Lease G" as the broker leases farm machinery to "Farmer A", an obligation for "Lease G" may arise.

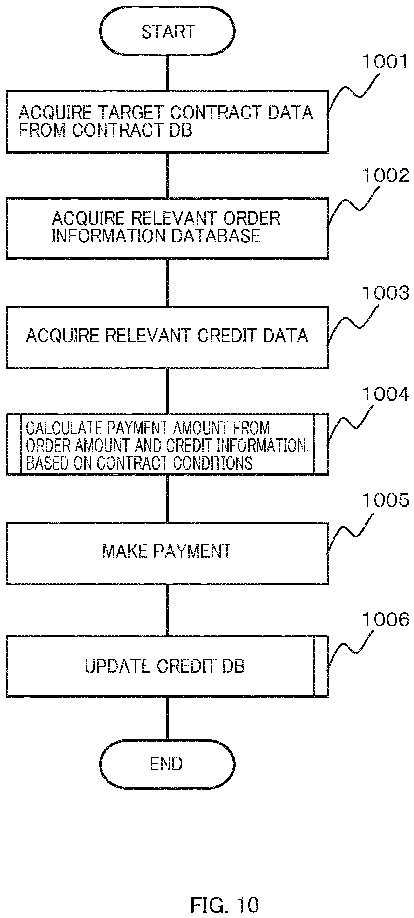

Next, the payment system 108 calculates a transaction value for this delivery event to execute payment processing based on the transaction value (Step 905) and then terminates the processing. This processing in Step 905 is described in detail later with reference to a flow shown in Fig. 10.

### Third flow example on transaction value calculation processing

Next, description is given of the processing details of Step 905 executed by the payment system 108 in the second flow example described above. Fig. 10 is a flowchart showing the third flow example of the revenue allocation method according to the present embodiment. To be more specific, Fig. 10 shows a flow example of transaction value calculation processing.

Here, for the transaction value calculation processing in Step 905, the payment system 108 specifies and acquires contract data, through the contract database 214, which is consistent with the delivery event in this case (Step 1001).

In this case, the payment system 108 uses the order number of the order corresponding to the delivery event in this case as a primary key to search through the order information database, for example, for a record, and acquires the respective values of the order destination 302, order source 303, delivery date 305, product name 306, and quantity 307 from the record. Also, the payment system 108 specifies the record of the order number in the shipment record database 211 and acquires the value of the delivery date 406 from the record.

Moreover, the payment system 108 uses a combination of the values of the order destination 302, order source 303, delivery date 305, product name 306, quantity 307, and delivery date 406 thus acquired (e.g.: order destination "Farmer A", order source "Plant B", delivery date "2017/03/12", product name "Carrot A", quantity "1000 bunches", and delivery date "2017/03/12") as a primary key to search through the contract database 214 and specify contract data with the value of the event 702 consistent with the key, and acquires the value of the execution content 703 of the contract data.

Meanwhile, when "crops are delivered from "Farmer A" to "Plant B" by the designated delivery date" is set as the value of the event 702 in certain contract data among the records in the contract database 214, i.e., the contract data, the payment system 108 determines that this contract data corresponds to the content of the delivery event that "Carrots A" as the crops are delivered from "Farmer A" to "Plant B" by the designated delivery date "2017/03/12" in the key described above, and thus acquires this contract data.

Subsequently, the payment system 108 acquires from the order information database 210 order information corresponding to the order number written into the shipment record database 211 in Step 903 in the second flow example described above (Step 1002).

Moreover, the payment system 108 acquires from the credit database 213 credit data corresponding to the order information acquired in Step 1002 described above (Step 1003). In this case, the payment system 108 uses the value of the order number 301 included in the order information to search through the credit database 213, and specifies and acquires the credit data with the value of the order number 602 corresponding to the order number 301.

Thereafter, the payment system 108 executes payment amount calculation processing by applying the order information acquired in Step 1002 and the credit data acquired in Step 1003 to the description of the execution content 703 in the contract data acquired in Step 1001 described above (Step 1004).

For example, it is assumed that "Farmer A" delivers crops produced by "Farmer A" to "Plant B" and then the crops are processed into products at "Plant B". It is also assumed that "Farmer A" asks "Retailer C" to sell the products processed at "Plant B". Furthermore, it is assumed that there is "Lease G" that makes loans or leases products such as farm machinery, product machinery, and POS terminals to "Farmer A", "Plant B", and "Retailer C".

In the conventional case, "Plant B" has a debt obligation for the crops to "Farmer A" and "Retailer C" has a debt obligation for the products to "Plant B", and payment is made, respectively. Furthermore, "Farmer A", "Plant B", and "Retailer C" have debt obligations for the lease equipment to "Lease G", and payment is made, respectively. Thus, payment is often made to a financial corporation, and the respective parties pay considerable commissions to the financial corporation.

Furthermore, the payment among "Farmer A", "Plant B", and "Retailer C" is arranged only between the vendors involved in the payment procedure. Therefore, it is difficult for "Farmer A" to get involved in the transaction between "Retailer C" and "Plant B". However, it is often the case that various values are added to the current processed products during the process of producing the processed products from the crops, and a price higher than the raw material cost by 150% or more is set for the processed products, which are sold at a retail store. However, it is the current situation that "Farmer A" cannot get a profit generated through the process from processing of the crops as the products produced by "Farmer A" into processed products to retailing the processed products to consumers.

Moreover, when it is attempted to allocate the sales obtained through retailing to the consumers and the process of producing the processed products to the farmer, sales proceeds are not given to the farmer until the retailing to the consumers is actually completed. For this reason, poor sales to the consumers are likely to seriously affect the farm management.

Therefore, the revenue allocation system 100 of the present embodiment is configured such that "Lease G" that is the broker executes processing for covering a risk of "Farmer A". More specifically, the revenue allocation system 100 enables "Lease G" to pay expected sales proceeds to "Farmer A" according to the description of the execution content 703 in the record with the contract ID 701 of "001" in the contract database 214.

In other words, "Lease G" covers a debt owed by "Plant B" to "Farmer A". However, in this case, the payment system 108 specifies the payment amount from "Lease G" to "Farmer A" as the amount obtained by subtracting the debt amount to be paid by "Farmer A" to "Lease G" (the value of the debt amount 605 in the corresponding record in the credit database 213) from the debt amount from "Plant B" (the value of the debt amount 605 in the corresponding record in the credit database 213) to perform predetermined payment processing (Step 1005). The payment processing is assumed to be processing using a predetermined banking service provided by a financial institution to transfer the appropriate amount to the account of the appropriate party.

Note that the payment system 108 described above is assumed to perform processing of changing the owner of "Carrot A" to "Lease G" as shown in the record with the ownership ID "002" in the ownership database 212. Accordingly, the amount to be paid by "Farmer A" to "Lease G" is paid with actual goods such as "Carrot A". Nevertheless, "Farmer A" can secure the sales proceeds early. Moreover, "Lease G" can get hold of vendors having difficulty in securing cash, such as "Farmer A", and thus can increase the number of lease customers. Moreover, the frequency of paying commissions to a bank can be reduced as a whole.

Furthermore, the payment system 108 can execute processing of "Lease G" covering a debt owed by "Retailer C" to "Plant B" (the value of the debt amount 605 in the corresponding record in the credit database 213) through the same processing as described above, thereby allowing "Lease G" to take over a management risk of "Plant B".

In the payment from "Plant B" to "Lease G" and then to "Retailer C", the ownership of the crops (for example, "Carrot A") is changed from "Lease G" to "Plant B". Thereafter, when "Retailer C" completes the payment to "Lease G", the ownership of the processed product (for example, "B dressing") is changed to "Retailer C". As a matter of course, the payment system 108 updates the ownership database 212 along with such changes in ownership.

Referring back to the processing flow shown in Fig. 10, the payment system 108 updates the credit database 213 (Step 1006). As a method for updating the credit database 213, the value of the debt amount 605 is set to 0 when "Lease G" covers all the debt owed by "Plant B" to "Farmer A" and completes the payment, as in the above example. Alternatively, the relevant record is deleted from the credit database 213. Meanwhile, as in the record with the credit ID "005", when there is a debt amount for farm machinery lease from "Lease G" to "Farmer A" and also a remaining value of the debt amount covered by "Lease G", the debt amount for the amount corresponding to a conventional lease expense is deleted from "Carrot A" delivered from "Farmer A" to "Lease G".

Furthermore, as described in the execution content in the record with the contract ID of "003" in the contract database 214 shown in Fig. 7, when products are sold to consumers by "Retailer C", the payment system 108 may automatically return some of the profits thus obtained to "Farmer A" or "Plant B". In this case, the debt amount for the farm machinery or production equipment owed by "Farmer A" or "Plant B" to "Lease G" is subtracted, for example.

Alternatively, some of the profits described above may be paid as commissions to "Lease G" that takes over some of the risks of "Farmer A", "Plant B", and "Retailer C".

### Fourth flow example on credit database update processing

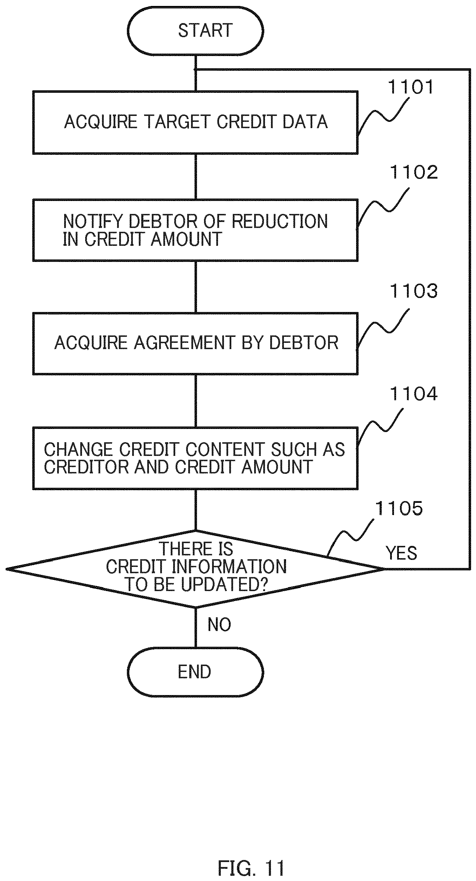

Next, with reference to Fig. 11, description is given of an example of Step 1006 in the third flow example described above, i.e., the processing of updating the credit database 213. Note that such processing of updating the credit database 213 is performed by the credit management system 107 in the revenue allocation system 100.

In this case, the credit management system 107 acquires credit data to be updated from the credit database 213 (Step 1101) .

Then, the credit management system 107 notifies the terminal of the vendor specified as the debtor 604 in the debt data acquired in Step 1101 described above of information regarding the payment amount (including the reduction in the debt amount) specified in Step 1004 described above (Step 1102) .

As a notification method, for example, e-mail, a messaging service of an SNS, push notification on a portable terminal such as a smartphone, and the like can be used. Moreover, the credit management system 107 may deliver and provide a dedicated application or a WEB service to the terminal of each vendor, and notify through a GUI thereof.

Thereafter, the credit management system 107 notifies the terminal of the debtor described above of a message encouraging to agree on the payment content (Step 1103). For example, when the debtor to "Farmer A" is changed from "Plant B" to "Lease G" as described above, the credit management system 107 notifies the terminal of a message encouraging both of "Plant B" and "Lease G" to reach agreement. Moreover, when the debt amount is reduced based on the profit obtained through the sales to the consumers, the credit management system 107 notifies the respective terminals of "Farmer A", "Plant B", and "Retailer C", for example, as the debtors of a message encouraging to agree on the reduction.

Furthermore, upon receipt of an agreement reply from the terminal of the relevant debtor in response to the notification in Step 1103 described above, the credit management system 107 changes the values of the relevant items in the relevant records in the credit database 213 and the ownership database 212 (the values of the owner 503, creditor 603, debtor 604, and debt amount 605) to the values thus specified (Step 1104).

Thereafter, on the one hand, the credit management system 107 determines whether or not there remains credit data to be changed in Step 1104 described above (Step 1105), and returns the processing to Step 1101 when there is credit data left to be updated (Step 1105: Yes). On the other hand, when it is determined, as a result of the determination described above, that there is no more credit data left to be updated (Step 1105: No), the credit management system 107 terminates the processing.

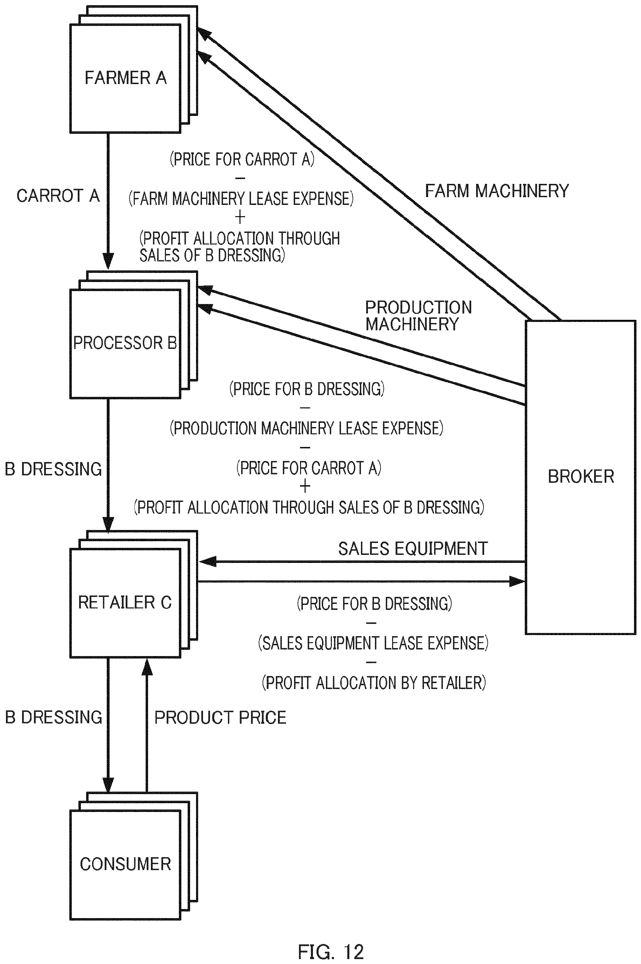

Fig. 12 shows the image of payment amount calculation among the vendors and the concept of the method for managing the credit database 213. In commercial distribution in the senary industry transformed from the primary industry, as for "Farmer A", for example, among respective participants in the commercial distribution, the revenue allocation system 100 calculates a payment amount by adding a predetermined percentage of a profit obtained through retailing the product "B dressing" (processed product produced by processing "Carrot A" purchased from "Farm A" by "Processor B") by "Retailer C" to the amount of a difference obtained by subtracting a debt owed to "Lease G" that is the broker (lease charge for the farm machinery leased by "Lease G") from the credit (sales proceeds of "Carrot A") for "Processor B" that is a sale destination of crops "Carrot A", and pays the payment amount to "Farmer A".

Likewise, as for "Processor B", the revenue allocation system 100 calculates a payment amount by adding a predetermined percentage of a profit obtained through retailing the processed product "B dressing" described above by "Retailer C" to the amount of a difference obtained by subtracting a debt owed to "Lease G" that is the broker (lease charge for the production machinery leased by "Lease G") from the credit (sales proceeds of "B dressing") for "Retailer C" that is a sale destination of the product "B dressing", and pays the payment amount to "Processor B".

Moreover, as for "Retailer C", the revenue allocation system 100 calculates a payment amount by adding a predetermined percentage of a profit obtained through retailing the processed product "B dressing" described above by "Retailer C" to the amount of a difference obtained by subtracting a debt owed to "Lease G" that is the broker (lease charge for the production machinery leased by "Lease G") from the credit (sales proceeds of "B dressing") for "Retailer C" while receiving payment for the product from the consumer that is a sale destination of the product "B dressing", and pays the payment amount to "Processor B".

More specifically, the revenue allocation system 100 serves as a platform for allocating a final revenue obtained through distribution of crops produced by the farmer (profits obtained by retailing "B dressing") to the respective vendors including "Farmer A" involved in distribution of the crops.

Note that, as the processing of "Lease G" as the broker covering a debt of each vendor, the revenue allocation system 100 sets "Lease G" to have the ownership and credit in the ownership database 212 and the credit database 213 so that the broker takes over the debt owed by "Processor B" to "Farmer A" (sales proceeds of "Carrot A") and the debt owed by "Retailer C" to "Processor B" (sales proceeds of B dressing).

Moreover, the revenue allocation system 100 can expedite the timing for primary sector workers such as farmers to get a revenue, and can also reduce the occurred of charges for payment to the financial institution. For example, the revenue allocation system 100 calculates the amount of revenue described above, based on a predetermined estimation algorithm, at the timing (for example, when "Carrot A" is delivered to "Processor B" by "Farmer A") before sales of "B dressing" by "Retailer C", and then adds the calculated revenue amount to the payment amount to each of the vendors including "Farmer A". As the revenue estimation algorithm described above, an existing algorithm may be adopted as appropriate for estimating sales of target crops or the like at a predetermined period, based on a result of analysis of correlation between attributes of the crops and processed products and sales performance thereof.

Note that the revenue allocation system 100 may change the value of the debt amount 605 in the credit database 213 in a predetermined regular pattern with time. For example, the revenue allocation system 100 may be configured to change the value of the debt value 605 by acquiring index information on a macro environment, such as an exchange rate and market conditions, from an external source and applying such information to predetermined rules (e.g.: linking fluctuations of the stock price index with fluctuations of the value of the debt amount 605 at a predetermined rate).

Moreover, other than the example of the vendors described in the present embodiment, vendors involved in supply chains may be further envisaged, such as a material manufacturer for various materials, a parts manufacturer for farm machinery, and a set manufacturer.

### Second Embodiment

In the first embodiment, the description is given of an example of the revenue allocation system 100 configured as a conventional centralized system. In the present embodiment, description is given of an example where a revenue allocation system is configured and utilized as a distributed ledger system. By applying such a distributed ledger system, effects of improving fault tolerance, preventing falsification of data, and the like, which are characteristics of Blockchain technologies, are further added to the effect achieved by the revenue allocation system 100 according to the first embodiment.

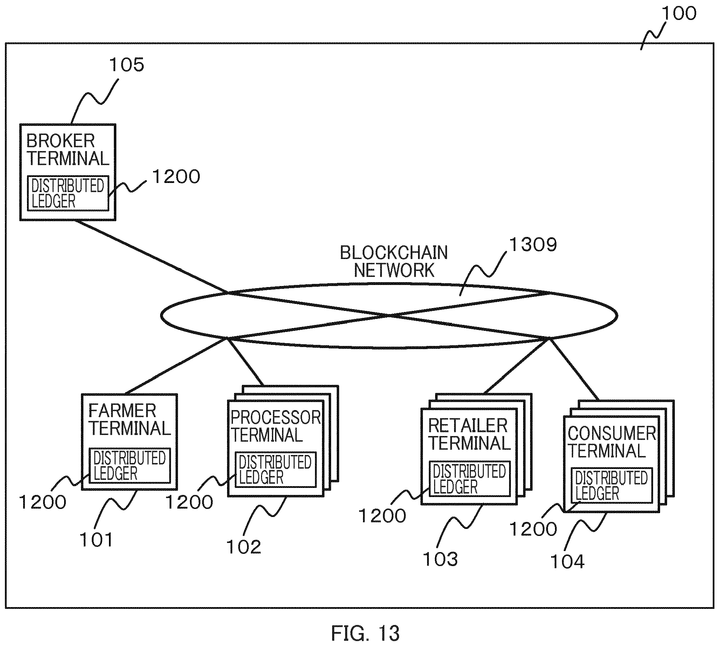

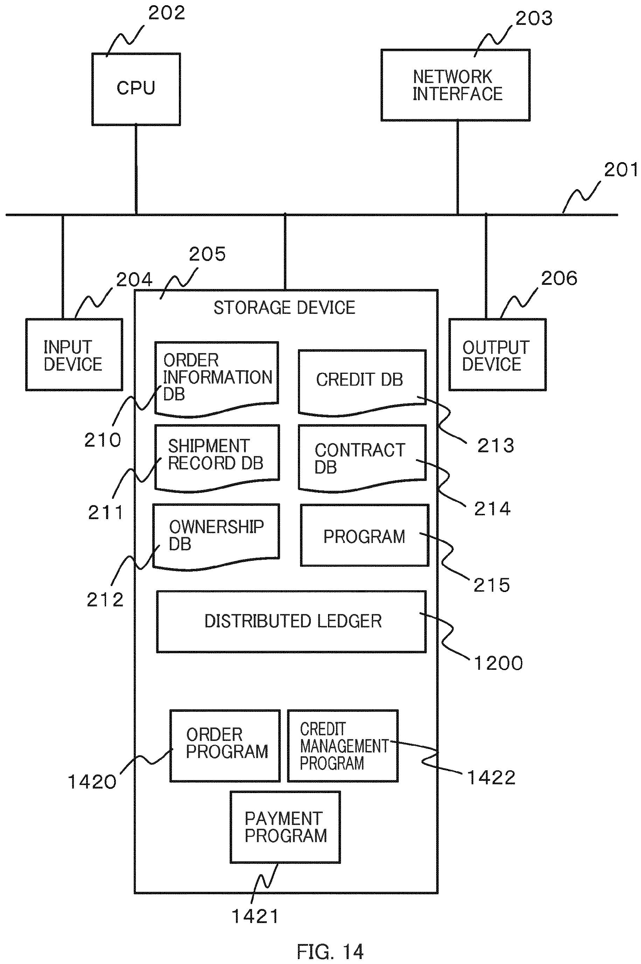

Fig. 13 is a diagram showing a configuration example of a revenue allocation system 100 according to the present embodiment. Fig. 14 is a diagram showing a hardware configuration example of each of terminals included in the revenue allocation system 100 of the present embodiment.

While the configuration shown in Fig. 13 is approximately the same as that shown in Fig. 1, the network 10 is replaced by Blockchain network 1309. Accordingly, the order system 106, the credit management system 107, and the payment system 108 are omitted. Note that, since the configuration of the present embodiment is the same as that of the first embodiment in many points, only differences are described below.

Blockchain network 1309 described above is a network that communicably coupling a farmer terminal 101, a processor terminal 102, a retailer terminal 103, and a broker terminal 105 to each other as nodes included in the distributed ledger system. Thus, each of the farmer terminal 101, the processor terminal 102, the retailer terminal 103, and the broker terminal 105 includes a distributed ledger 1200 in respective storage device. Also, transactions associated with processing by each terminal are delivered to each terminal and stored in the respective distributed ledger, after creation of agreement at each node by Blockchain technologies, to form Blockchain. The use of such Blockchain technologies makes it impossible for a malicious one among participants in commercial distribution to falsify data.

Note that the order system 106, the credit management system 107 and the payment system 108 described in the first embodiment may be implemented by installing programs 1420, 1421, and 1422 corresponding thereto into the farmer terminal 101, the processor terminal 102, the retailer terminal 103, and the broker terminal 105, respectively (see Fig. 14).

With such a configuration, it is assumed, for example, that the processor terminal 102 of "Processor B" executes processing of ordering crops "Carrot A" of "Farmer A" with its own order program 1420. Then, the processor terminal 102 issues transactions including information such as an order content in the order, and delivers such transactions to the other nodes in Blockchain network 1309, i.e., the farmer terminal 101 of "Farmer A", the retailer terminal 103 of "Retailer C", and the broker terminal 105 of "Lease G" as the broker, respectively. Upon receipt of such delivery, the respective terminals execute agreement creation processing with Blockchain technologies, and stores the transactions generated within a certain period of time including those described above in the distributed ledger as Blockchain.

The processing starting from the issuance of transactions to the storage of Blockchain in the distributed ledger 1200 described above is executed at every occurrence of each event, such as order, agreement on order content, storage in the order information database 210, occurrence of delivery event, write into the shipment record database 211, addition of credit information, calculation of transaction amount, payment amount calculation and payment processing, and update of the credit database 213. Also, the respective terminals as the nodes coupled to Blockchain network 1309 can verify all actions of their own and of the others as participants in commercial distribution.

Note that, in Blockchain technologies, there is a mechanism of a so-called smart contract for autonomously conducting transactions under complicated terms and conditions.

Therefore, the respective terminals may include an order program 1420, a payment program 1421, and a credit management program 1422 for autonomously executing processing such as agreement confirmation processing for orders, processing of calculating the payment amount and executing payment based on contract data in the contract database 214, and processing of updating the credit data, based on information obtained from the terminals of respective participants in commercial distribution or information obtained from the respective databases, by applying such a mechanism of smart contract to the revenue allocation system 100 of the present embodiment. As a matter of course, such transactions associated with the processing with the respective programs as smart contracts are also delivered to Blockchain network 1309 and stored in the respective distributed ledger 1200, after creation of agreement at each terminal, to form Blockchain.

While the best modes for carrying out the present invention and the like have been specifically described above, the present invention is not limited thereto, but various changes may be made thereto without departing from the scope of the invention.

The present embodiments thus described make it possible to stabilize and expedite incomes of primary sector workers and thus to support the promotion of transformation of the primary industry into the senary industry.

The description of the present specification clarifies at least the following. Specifically, in the revenue allocation system of the present embodiments, the arithmetic device specifies, based on the information on the transactions, a revenue amount obtained in a transaction at the end of the commercial distributions by the creditor of the transaction, adds the revenue amount to the difference in value between the credit held by the broker for the creditor of each transaction in the commercial distributions and the ownership obtained from the creditor through the purchase processing, and executes predetermined payment processing for an amount obtained by adding the revenue amount to the difference, to the creditor of each transaction.

The revenue allocation system described above makes it possible to further stabilize and expedite incomes of primary sector workers by further allocating even the revenue from retailing at the end of commercial distributions, in addition to early revenue allocation by the broker to creditors (including primary sector workers) on the upstream of the commercial distributions as parties of transactions in the commercial distributions undergoing transformation from the primary industry into the sixth industry.

Moreover, in the revenue allocation system of the present embodiments, the arithmetic device calculates the revenue amount based on a predetermined revenue estimation algorithm, before the transaction at the end of the commercial distributions, and adds the calculated revenue amount to the difference.

The revenue allocation system described above makes it possible to even further stabilize and expedite incomes of primary sector workers by further allocating even the predicted revenue without waiting for retailing at the end of the commercial distributions, in addition to early revenue allocation by the broker to the creditors (including primary sector workers) on the upstream of the commercial distributions as the parties of transactions in the commercial distributions undergoing transformation from the primary industry into the senary industry.

Moreover, in the revenue allocation system of the present embodiments, at terminals of participants in the commercial distributions, the information on transactions in the commercial distributions is managed with distributed ledgers held in storage devices in respective terminals.

The revenue allocation system described above makes it possible for participants to validate and guarantee the information associated with the transactions, using the terminals (terminals of participants in the commercial distributions) in the distributed ledger system as the entities for executing the revenue allocation method. Moreover, each of participants can individually check the contents of revenue, credit, and debt generated through transactions, and thus can accurately validate and justify the revenue allocation. Accordingly, the revenue allocation system can accurately stabilize and expedite incomes of primary sector workers.

## Claims

1. A revenue allocation system comprising:
a storage device that manages information on transactions generated in commercial distribution of products produced by primary sector workers, the commercial distribution starting from the primary sector workers; and
an arithmetic device that executes predetermined purchase processing for ownership of a delivered product associated with a predetermined transaction in the commercial distribution, with a predetermined broker as a buyer, based on the information on the transactions, that calculates a difference in value between a credit held by the broker for a creditor of the transaction and the ownership obtained through the purchase processing, and that executes predetermined payment processing for an amount corresponding to the difference for the creditor of the transaction.

2. The revenue allocation system according to claim 1, wherein
the arithmetic device specifies, based on the information on the transactions, a revenue amount obtained in a transaction at the end of the commercial distribution by the creditor of the transaction, adds the revenue amount to the difference in value between the credit held by the broker for the creditor of each transaction in the commercial distribution and the ownership obtained from the creditor through the purchase processing, and executes predetermined payment processing for an amount obtained by adding the revenue amount to the difference, to the creditor of each transaction.

3. The revenue allocation system according to claim 2, wherein
the arithmetic device calculates the revenue amount based on a predetermined revenue estimation algorithm, before the transaction at the end of the commercial distribution, and adds the calculated revenue amount to the difference.

4. The revenue allocation system according to claim 1, wherein
at terminals of participants in the commercial distribution, the information on transactions in the commercial distribution is managed with distributed ledgers held in storage devices in the respective terminals.

5. A revenue allocation method implemented by an information processor including a storage device that manages information on transactions generated in commercial distribution of products produced by primary sector workers, the commercial distribution starting from the primary sector workers, comprising:
executing predetermined purchase processing for ownership of a delivered product associated with a predetermined transaction in the commercial distribution, with a predetermined broker as a buyer, based on the information on the transactions, calculating a difference in value between a credit held by the broker for a creditor of the transaction and the ownership obtained through the purchase processing, and executing predetermined payment processing for an amount corresponding to the difference for the creditor of the transaction.

6. A non-transitory computer-readable medium containing a program causing an information processor including a storage device that manages information on transactions generated in commercial distribution of products produced by primary sector workers, the commercial distribution starting from the primary sector workers, to
execute predetermined purchase processing for ownership of a delivered product associated with a predetermined transaction in the commercial distribution, with a predetermined broker as a buyer, based on the information on the transactions, calculate a difference in value between a credit held by the broker for a creditor of the transaction and the ownership obtained through the purchase processing, and execute predetermined payment processing for an amount corresponding to the difference for the creditor of the transaction.
